# EUROPEAN PATENT APPLICATION

(11) **EP 1 775 673 A2**
(43) Date of publication of application: **18.04.2007**
(21) Application number: 06255304.5
(22) Date of filing: 16.10.2006
(51) Int. Cl.: G06F 21/20

(54) **Token authentication system**

(30) Priority: 17.10.2005 US 252040
(71) Applicant: Saflink Corporation, Kirkland, WA 98034 (US)
(72) Inventor: Mercredi, Dwayne, Bothell WA 98011 (US); Robinson, Joseph, Edmonton Alberta, Canada T6X 1G3 (US); Vance, Joachim, Mission Viejo CA 92692 (US)
(74) Representative: Findlay, Alice Rosemary

(57) **Abstract**

An apparatus, method and program product for enabling token authentication by generating a secret key using manufacturer controlled information (57) present on a token (34). A computer (30) typically reads the manufacturer controlled information and applies an cryptographic algorithm (41) to determine the secret key (47). The secret key (47) may comprise or be used to generate a one-time password (42) for use in authenticating the token (34). Typical manufacturer controlled information (57) present on the token (34) includes static, non-writeable/erasable information, such as a serial number (56) or manufacturer ID (54). Where desired, the token authentication is accomplished in the absence of memory or processors on the token that are dedicated to the authentication process, itself. This absence reduces token hardware requirements and associated expenses. The dynamic generation of the cryptographic key (47) also reduces risks conventionally associated with duplicating static keys stored within token memory. Where desired, token includes a password (55) and/or a user name (53) in addition to the manufacturer controlled information (57) for realizing multiple factor authentication. As such, the password (55) and user name (53) stored on the token (34) may automatically be transmitted to the access device (14).

## Description

The present invention relates generally to electronically controlled access technologies, and more particularly, to the use of token authentication to control access to protected information and areas.

Authentication tokens promote relatively quick access to secured data and other resources. Tokens include objects that are read by an access control device to determine whether a user presenting the token should be given access. As the token holder approaches or otherwise submits the token, the access control device interrogates the token to make the determination.

Tokens of varying costs and complexity have been developed. For instance, tokens routinely incorporate cryptographic mechanisms for authentication. Encrypted codes are commonly stored within token memory for eventual decryption by the access device. To this end, tokens additionally rely on dedicated processors and/or memory for use during authentication.

While tokens provide some measure of convenience and security, concerns relating to token implementation persist. For instance, cryptographic information stored in the memory of the token can be accessed and duplicated. Furthermore, while onboard memory and/or processing dedicated to authentication is generally viewed as a practical necessity, these dedicated components nonetheless inflate the cost of implementing a token-based system, which undermines the practicality of token authentication.

Though not used for authentication, tokens additionally include a set of generally unalterable data used by manufacturers. Such data includes serial numbers, manufacturer identifier data, time of manufacture, and/or other manufacturer controlled information used for inventory, quality control and other accounting purposes. We have discovered that this manufacturer controlled information may be used to eliminate certain complexities conventionally associated with token authentication.

In one aspect, the present invention provides an apparatus, program product and method for enabling token authentication by generating a crytographic key using manufacturer controlled data present on a token. Authentication may thus be simplified by reducing the need for onboard processors and token memory used for authentication. Instead, manufacturer controlled information already on the token is used, minimizing token costs. This feature further allows general purpose tokens already in wide existence to be used, rather than requiring a new special-purpose tokens to be acquired for the specific purpose of authentication. Moreover, since virtually all electronic devices include some manner of manufacturer controlled information, virtually any device having electronically readable data may be used to authenticate a user. For instance, a flash drive may be used as a token.

While simplifying certain aspects of authentication, embodiments can take further advantage of other features, such as one-time password encryption. A one-time password algorithm generates a password that can only be used once to authenticate. In another example, passwords, user names, and/or other data is used in addition to the manufacturer controlled information for realizing a login in a system that requires multiple factor (multifactor) authentication. In one such embodiment, the password is stored on the token and is automatically transmitted to the access device, possibly along with the user identifier (ID). This automatic and transparent provision of the password enables a streamlined login without requiring the user to do more than submit the token, i.e., type in a password or user ID. In another example, a user may submit a password or biometric to realize a true multifactor authentication.

The invention will now be further described by way of example with reference to the accompanying drawings in which:
Fig. 1 is a schematic diagram of an access control apparatus comprising a computer system and access token that are consistent with the invention.
Fig. 2 is a block diagram of an exemplary hardware and software environment for an access control apparatus that is consistent with the invention.
Fig. 3 is a flowchart outlining method steps suited for enabling token authentication using manufacturer controlled information read from the token of Fig. 2.
Fig. 4 is a flowchart outlining method steps suited for re-synchronizing a counter of Fig. 2 used in a one-time password authentication.

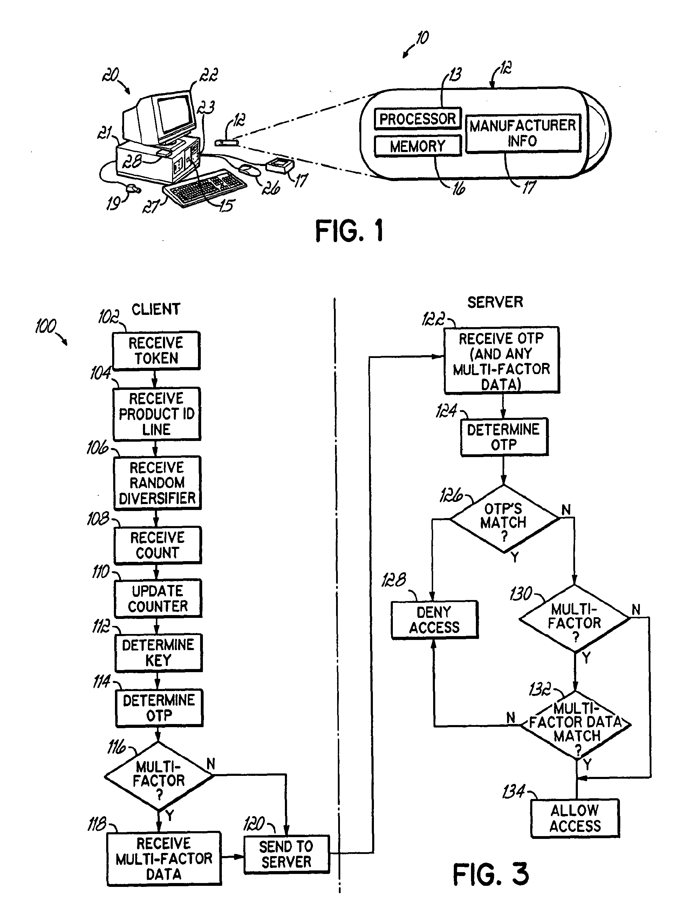

Turning to the Drawings, the computer system 10 of Fig. 1 comprises an exemplary access control apparatus 10 configured to enable token authentication by generating a cryptographic key using static, manufacturer controlled information 17 present on the token 12. Typical manufacturer controlled information 17 present on the token 12 includes static, non-writeable/erasable (generally unalterable) data, such as a serial number or manufacturer ID. A computer 20 typically reads the manufacturer controlled information 17 and applies a cryptographic algorithm to determine the secret, cryptographic key. The cryptographic key may comprise or be used to generate a one-time password used to authenticate the token. As such, the portable advantages of traditional token authentications are realized, while the actual cryptographic determinations using the manufacturer controlled information may occur in a computer software module.

Fig. 1 more particularly shows a networked computer system that includes a client computer 20 (e.g., lap top, desktop or PC-based computer, workstation, etc.), which may or may not be in communication with a network (not shown). Computer 20 is in electronic communication with the token 12. While such communication may be wireless in some embodiments, the token 12 in Fig. 1 physically connects to a Universal Serial Bus (USB) port 15. Token 12 comprises a general purpose flash drive that includes a small circuit board with a dedicated processor 13 and one or more memory chips 16, all of which are enclosed within a relatively rugged, plastic shell. The flash drive, or memory storage card, additionally includes manufacturer controlled information 17, e.g., a serial number.

Flash drives typically provide alterable, e.g., erasable, writeable and readable, memory. The onboard processor(s) 13 of the flash drive may provide increased processing power for computers requiring additional processing resources. A USB connector typically protrudes from the flash drive for insertion into the computer's USB port 15.

User computer 20 may include: a hard drive 21 and associated central processing unit (CPU), a number of peripheral components such as a computer display 22, a storage device 23, a printer (not shown), and various input devices (e.g., a USB port 15, a mouse 26, keyboard 27, remote token detector 28) to include biometric login devices (fingerprint reader 17, iris scanner 19)..

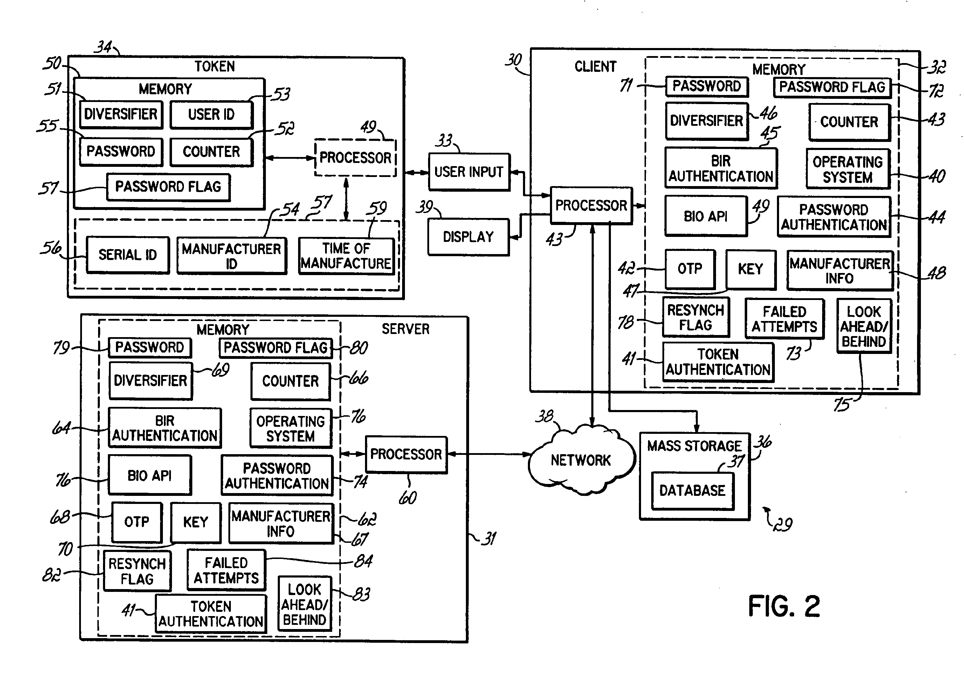

Fig. 2 illustrates in greater detail a hardware and software environment for an apparatus 29 suited to enable token authentication by generating a cryptographic key using static, manufacturer controlled information 17 present on the token 34. The apparatus 29 more particularly comprises client and server computers 30, 31 configured to use the manufacturer controlled information 17 to authenticate the token 34. Apparatus 29 may more particularly represent a computer, computer system or other programmable electronic device, including: a client computer 30 (e.g., similar to computer 20 of Fig. 1), a server computer 31, a portable computer, an embedded controller, etc., used to authenticate a token(s) 34 presented by a user. Apparatus 29 will hereinafter also be referred to as a "computer system," or "computer," although it should be appreciated that the terms "apparatus" and "access control device" may also include other suitable programmable electronic devices, such as a vault access controller or a controller operating a vehicle ignition switch, among many others. Moreover, while only one server computer 31 is shown in Fig. 2, any number of computers and other devices may be networked through network 18.

Furthermore, while the system 29 of Fig. 2 is set up for networked token authentication, client computer 30 may alternatively authenticate a token 34 when disconnected from or otherwise in use without the network 38. That is, computers 30 and 31 are configured for either a networked or standalone token authentication. As such, client computer 30 is shown having various memory components that may not be utilized when a network authentication at the server computer 31 is attempted. Conversely, the server computer 31 may not be utilized when a token is authenticated in standalone mode at the client computer 30, i.e., when disconnected from the server computer 31.

Computer 30 typically includes at least one processor 43 coupled to a memory 32. Processor 43 may represent one or more processors (e.g., microprocessors), and memory 32 may represent the random access memory (RAM) devices comprising the main storage of computer 30, as well as any supplemental levels of memory, e.g., cache memories, non-volatile or backup memories (e.g., programmable or flash memories), read-only memories, etc. In addition, memory 32 may be considered to include memory storage physically located elsewhere in computer 30, e.g., any cache memory present in processor 43, as well as any storage capacity used as a virtual memory, e.g., as stored within a database 37, or on another computer coupled to computer 30 via network 38.

Computer 30 also may receive a number of inputs and outputs for communicating information externally. For interface with a user, computer 30 typically includes one or more input devices 33 (e.g., a token detector, a keyboard, a mouse, a trackball, a joystick, a touch pad, iris/fingerprint scanner, and/or a microphone, among others). A token detector comprising the input device 33 may more particularly include a token detector, such as a USB port, a card slot reader, a radio frequency receiver, a transmitter, or a transponder for communicating with one or more tokens 34.

The client computer 30 additionally includes a display 39 (e.g., a CRT monitor, an LCD display panel, and/or a speaker, among others). It should be appreciated, however, that with some implementations of the client computer 30, direct user input and output may not be supported by the computer, and interface with the computer may be implemented through a client computer or workstation networked with the client computer 30.

For additional storage, computer 30 may also include one or more mass storage devices 36 configured to store a database 37. Exemplary devices 36 can include: a floppy or other removable disk drive, a flash drive, a hard disk drive, a direct access storage device (DASD), an optical drive (e.g., a CD drive, a DVD drive, etc.), and/or a tape drive, among others. Furthermore, computer 30 may include an interface with one or more networks 38 (e.g., a LAN, a WAN, a wireless network, and/or the Internet, among others) to permit the communication of information with other computers coupled to the network 38. It should be appreciated that computer 30 typically includes suitable analog and/or digital interfaces between processor 43 and each of components 32, 33, 36 38 and 39.

Computer 30 operates under the control of an operating system 40, and executes various computer software applications, components, programs, objects, modules, e.g., a token authentication program 41, one-time password authentication program 42, password authentication program 44, BIR authentication program 45 and BioAPI 49, among others. While embodiments described herein use a one-time password algorithm 42, one skilled in the art will recognize that other cryptographic algorithms may alternatively or additionally be used. BioAPI program 49 regards a programming interface supplied by biometric service providers that provides enrollment and verification services for installed biometric devices (e.g., iris or fingerprint scanner, and/or a microphone, among others).

Various applications, components, programs, objects, modules, etc. may also execute on one or more processors in another computer coupled to computer 30 via a network 38, e.g., in a distributed or client-server computing environment, whereby the processing required to implement the functions of a computer program may be allocated to multiple computers over a network.

The memory 32 shown in Fig. 2 includes various data components that may be utilized by the programs to accomplish a token authentication. As with other memory components described herein, the data may be stored locally as shown in Fig. 2, or may alternatively be remotely accessed. Examples of such data include a counter 43 that may be incremented after each successful authentication. While the counter 43 shown in Fig. 2 has particular application with the one-time password algorithm 42, one skilled in the art will appreciate that another embodiment alternatively incorporates a clock mechanism for use with one-time password authentication processes.

Another example of stored data comprises a random diversifier 46 used to alter the manufacturer controlled information 48, 57, 67. A random diversifier 46 may comprise a sequence of numbers and/or characters that program code at the client computer will read and include in the copy of the read manufacturer controlled information 57. Because the manufacturer controlled information of the token can typically not be changed, the random diversifier 46 effectively allows the different manufacturer controlled information to be varied. As such, a read/transmitted copy of a serial number of a flash drive may be altered from the actual sequence of the serial number. While the client computer 30 will typically perform the modification of the manufacturer controlled information 57 using the random diversifier 46, program code executed on the token 34 may affect the modification in another embodiment.

Other examples of stored data may include a copy of a cryptographic key 41 for comparison to a key dynamically determined by authentication program(s) using, in part, token manufacturer controlled information 57. Stored manufacturer controlled information 48 matching manufacturer controlled information 57 of the token may be accessed during authentication.

For convenience considerations, a system user may authenticate without a password. Other embodiments, however, may incorporate multifactor authentication by including a password or biometric data. Submission of a password in addition to a token, for instance, requires an attacker to compromise both the user's password and the token. Where only one-factor authentication is desired, but two-factor authentication is required, a default password 55 may be read from the token 34 and/or be forwarded by the client computer 30 to the server computer 31. In another embodiment, a USB drive may support an additional factor of authentication through a fingerprint or other biometric submission. USB drives may be enhanced to provide additional protection for authentication. One such enhancement may include a device that is completely inaccessible until a biometric is provided to unlock the device. This kind of functionality can provide a certain amount of protection from denial of service attacks and device cloning when the device is not in use by the user.

The password 55 may comprise a default password that is automatically passed onto the server computer 31. Alternatively, the password 55 may comprise a password automatically received from the token 34, a password typed in by a user, or a default password 71 automatically forwarded by the client computer 30. A password flag 72 may be used to programmatically require a password to be entered by the user. This feature allows the password required policy to be verified without having to retrieve a policy from a server.

A failed attempts count 73 sets a limit to the number of unsuccessful attempts that can occur before suspending future authentications with a given token. As described below in greater detail, a look ahead/behind count 75 may be used to authenticate and re-synchronize the counter 43, as well as to detect possible attempts to unlawfully access a resource using a falsified token. For instance, a compromised key may be detected when the counter 52 on the token 34 is older (lower) than the counter 43 on an authenticating computer 30.

The exemplary token 34 shown in Fig. 2 includes manufacturer controlled information 57 that may be used by either or both the client and server computers 30, 31 during authentication. Manufacturer controlled information 57 is typically static, or unchanging, such as a serial number 56 and/or a manufacturer identifier 58 conventionally manufactured with a flash drive. As discussed herein, the client or server computer 30, 31 may dynamically generate a cryptographic key using this manufacturer controlled information 57 received from the token 34.

The token 34 may include a memory 50, which in addition to functional data that may vary per application specifications, e.g., additional memory or programming for client computer 30, includes data components used during token authentication. For instance, the token 34 includes a random diversifier 51, or sequence of data values, which is used by the client computer 30 to programmatically scramble or otherwise alter the manufacturer controlled information 48, 57, 67. For instance, different values of the random diversifier 51 may be interspersed within the manufacturer controlled information 57 read from the token 34. A typical random diversifier may include a 32-byte value (256 bits).

During device registration, the random diversifier 51 may be generated and written to the token 34 along with an initial counter value 52. The user name 53 may also be established at this time and may be likewise written to the token 34. The secret, cryptographic key is typically generated in real time using the manufacturer controlled information 57 and the random diversifier 51. In the sense that cryptography is the process of altering data to make it secret, the random diversifier 69 represents another crytpographic feature of the embodiment. However, another embodiment may alternatively or additionally incorporate other cryptographic mechanisms and processes known in the art.

The counter 52 may be maintained within memory 50 of the token 34 for use with the one-time password program 42. An exemplary counter 52 may include an eight byte value. A corresponding counter(s) 43, 66 is also stored on the authenticating computer 30, 31 and is updated with every one-time password calculation. While not shown in Fig. 2, one skilled in the art will appreciate that a clock mechanism could be substituted for the counter 52 in an embodiment where the one-time password relied on time readings from a clock, rather than on a counter implementation.

The counter 52 is used to calculate the one-time password. A one-time password algorithm generates a password that can only be used once to authenticate. As shown in Fig. 2, the token includes manufacturer controlled information 57 used by the server computer 31 to determine a one-time password. The system 10 may additionally use a secret and changing parameter such as a counter 52 or clock (not shown) to calculate the one-time password. The server computer 31 also uses its copy of the manufacturer controlled information 67 and a previously synchronized copy of the changing counter 66. If the one-time password from the user and the server match (assuming the changing password parameter is within a certain range), then the authentication is valid. One example of a one-time password algorithm having particular application with an embodiment is the Open AuTHentication (OATH) algorithm.

The one-time password determination typically occurs in computer software executing remotely from the token 34. To protect the secrecy of the cryptographic key 70, the cryptographic key 70 is typically deleted from computer memory 62 after its determination. Other techniques known in the art for preventing the key 70 from being copied to paged memory may also be utilized.

The token 34 may additionally provide for streamlined authentication. For instance, the token 34 may include a stored user ID 53 and/or password 55 that is automatically received by the client computer 30. The user password is typically stored as a salted hashed value. A hash is a numerical value of fixed length that unequivocally identifies files of arbitrary length. A salted hash adds a random value to each password. For comparison of the password, the salt is typically stored along side the salted hash.

By virtue of the automatic submission, a streamlined authentication may be realized transparently to the user. That is, the user may only be aware that they have plugged a flash drive into a USB port, and may thus remain unburdened with actively having to submit a conventional multifactor authentication. In another embodiment, the client computer 30 may automatically submit its own copy of a password to the server computer 31 to accomplish a transparent multifactor authentication. In any case, a setting of a password flag 57 stored on the token 34 may alternatively prompt the computer 30 to require the user to actively submit a Personal Identification Number (PIN) or other password.

While more sophisticated tokens known in the art may be used in accordance with the principles of the present invention, so-called "dumb" tokens will suffice. As such, a token for purposes of the specification may include any portable device having computer-readable manufacturer controlled information. Where desired, the token 34 may include a processor 49. The token 34 may include its own receiver and/or transmitter. Suitable tokens may comprise passive or actively transmitting tokens. Tokens of other embodiments may include memory having random code, e.g., a random diversifier, which may be used independently of any manufacturer controlled data to generate a cryptographic key. As such, the random diversifier may be processed in a manner analogous to the manufacturer controlled data.

As shown in Fig. 2, the server computer 31 may include many of the same or similar components as included in the client computer 30. For instance, the server computer 31 may include: a processor(s) 60, a memory 62, BIR Authentication program 64, a counter 66, copies of manufacturer controlled information 67 matching the token(s)' 34, one-time password(s) 68, copy of random diversifier 69, cryptographic key(s) 70, a password authentication program 74, BioAPI 76, an operating system 77, password(s) 79, a password flag 80, an audit log 81, and a re-synchronization flag 82, as well as a look ahead and/or look behind program 83.

The discussion hereinafter will focus on the specific routines utilized to authenticate a token using manufacturer controlled information 57 present on the token 34. In general, the routines executed to implement the embodiments of the invention, whether implemented as part of an operating system or a specific application, component, program, object, module or sequence of instructions will be referred to herein as "programs," or simply "program code." The programs typically comprise one or more instructions that are resident at various times in various control device memory and storage devices. When a program is read and executed by a processor, the program causes the access control device to execute steps or elements embodying the various aspects of the invention.

Moreover, while the invention has and hereinafter will be described in the context of fully functioning access control devices, such as computer systems, those skilled in the art will appreciate that the various embodiments of the invention are capable of being distributed as a program product in a variety of forms, and that the invention applies equally regardless of the particular type of computer readable signal bearing media used to actually carry out the distribution. Examples of computer readable signal bearing media include but are not limited to recordable type media such as volatile and non-volatile memory devices, floppy and other removable disks, hard disk drives, optical disks (e.g., CD-ROM's, DVD's, etc.), among others, and transmission type media such as digital and analog communication links.

In addition, various programs described hereinafter may be identified based upon the application for which they are implemented in a specific embodiment of the invention. However, it should be appreciated that any particular program nomenclature that follows is used merely for convenience, and thus the invention should not be limited to use solely in any specific application identified and/or implied by such nomenclature.

Those skilled in the art will recognize that the exemplary environments illustrated in Figs. 1 and 2 are not intended to limit the present invention. Indeed, those skilled in the art will recognize that other alternative hardware and/or software environments may be used.

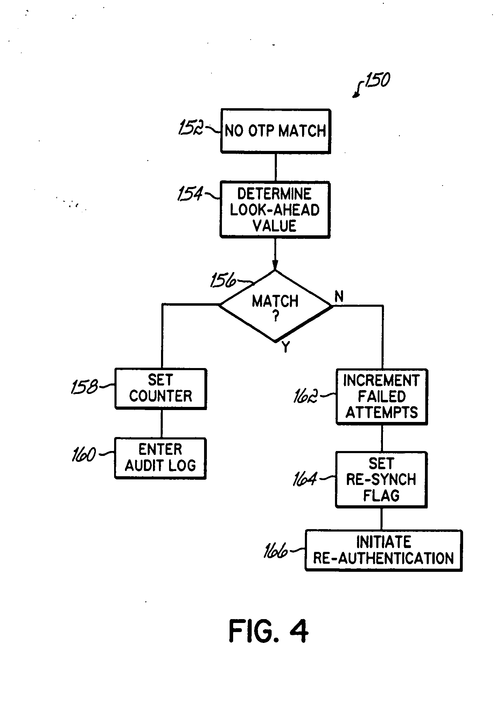

The flowchart 100 of Fig. 3 includes steps for enabling token authentication using manufacturer controlled information read from a token 34. The steps of the flowchart 100 more particularly show an exemplary sequence of steps taken from the respective perspectives of both a client and server computer 30, 31 during authentication. At block 102, the client computer 30 receives the token 34. For instance, a USB port 15 of the client computer 30 may receive a plug component of a flash drive. In another embodiment, the client computer 30 wirelessly receives information from the token 34 via a token sensor 38.

Upon receiving the token 34, the client computer 30 reads or otherwise receives manufacturer controlled information 57 at block 104 of Fig. 3. For instance, the client computer 30 may read a serial number 56 or manufacturer identifier 58 from a flash drive. Manufacturer controlled information 57 is typically fixed by the token manufacturer and is generally static and read-only. Manufacturer controlled information thus may not include stored crytographic keys or passwords used for authentication. Due to its fixed nature, the manufacturer controlled information 57 may remain the same irrespective of what machine receives it. That is, the manufacturer controlled information 57 typically remains the same even when the token 34 is inserted into different operating systems.

The client computer 30 may retrieve or otherwise receive at block 106 of Fig. 3 from memory 50 the random diversifier 51 from the token 34. Because it may be desirable to not be tied to one secret, the system 10 uses the random diversifier 51 to generate the crytographic data. Copies of the random diversifier 51 and 69 may be stored on both the token 34 and the server computer 31. Using the random diversifier 51 in this way enables variation of the secret despite the unchanging nature of the device ID or other token manufacturer controlled information 57.

The client computer 30 may similarly receive at block 108 the current token count from the counter 52 of the token 34. At block 110, the client computer 30 increments or otherwise updates the counter 52 of the token 34.

The client computer 30 determines at block 112 the cryptographic key. More particularly, the client computer 30 may process its copy of the random diversifier 46 and the manufacturer controlled information 57 using a cryptographic algorithm. The computer 30 thus dynamically applies a crytographic algorithm to the token manufacturer controlled information 57 to determine a key. In turn, the computer 30 may use the cryptographic key to determine the one-time password at block 114.

If at block 116 the authentication process requires multifactor data, the client computer 30 may prompt and receive such data at block 118. For instance, the computer 30 may read a default password from the token 34, and/or may receive a password or biometric actively submitted by a user. In any case, the determined one-time password and any multifactor data are sent to and received by the server computer 31 respectively at blocks 120 and 122 of Fig. 3.

While Fig. 3 shows an interaction between a client and server computer, one skilled in the art will appreciate that the steps designated as being executed by the server computer 31 in Fig. 3 could alternatively be accomplished by the client computer 30 in a stand-alone authentication process, i.e., where the client computer 30 is not networked to the server computer 31.

The server computer 31 determines at block 124 the one-time password using its own copy of the manufacturer controlled information 67 and random diversifier 69. For instance, the server computer 31 may recall the secret key from storage. In another embodiment, the computer 31 will apply the same crytographic algorithm 74 as used at the client computer 30 to determine the secret key and one-time password. If at block 126 the one-time password determined from using the token information matches the one-time password determined by (using the server information 67, 69) or stored at the server computer 31, then any multifactor data may next be authenticated at block 130.

More particularly, a two-factor submission to the server computer 31 may comprise a string that is a concatenation of the one-time password and the password 55. Additional data may be used, but is not necessary, to separate the one-time password and the password 55 in the multifactor submission, or two-factor password. The server computer 31 may accept the concatenated multifactor submission as a plain text value. The one-time password and password 55 are typically not transmitted as hashed values in the multifactor submission. This feature allows a system 10 to use any user name/password authentication mechanism as a carrier for a one-time password and the password authentication data. For example, the system 10 could make use of a web-based password authentication to transmit the multifactor submission to the server. Having no separator may allow the multifactor submission to be compatible with other known one-time password deployments.

The user name and multifactor submission will typically be encrypted and digitally signed for transit to the server computer 31 such that the server computer 31 may validate the integrity of the data transmitted and detect replay attempts.

Upon receipt of the multifactor submission, the server computer 31 may determine the one-time password from the secret and the counter. In another embodiment, the server computer 31 may calculate a one-time password value based on the user's one-time secret, the current counter value 66, and the one-time password parameters, i.e, manufacturer controlled information 67 and random diversifier 69. In any case, the number of characters in the calculated one-time password will be compared against the same number of characters in the first part of the multifactor submission passed to the server computer 31. If they match, then the one-time password sent from the client is valid. Next, the remaining characters in the multifactor submission are treated as the user password 55, e.g. PIN. This data may be salted and hashed following the method that the stored user PIN was hashed and compared against the stored user PIN. If they match, then the correct one-time password/PIN multifactor submission was provided from the client, and both authentication factors are valid.

Should the multifactor submission data fail to match at block 132, then the user is denied access at block 128. Should both the one-time password and any multifactor data alternatively match at blocks 126 and 130, then the user may be granted access to a computer resource at block 134.

Fig. 4 is a flowchart 150 having steps for re-synchronizing a counter 66 used in a one-time password authentication. The server computer's counter 66 is generally only incremented in response to a successful one-time password authentication. The token's counter 52, however, may be incremented when not in communication with the server computer 31, i.e., during a disconnected authentication. As such, the counters 52, 66 may become out of step. The system 10 may presume in response to an unsuccessful authentication that the counters 52, 66 are out of synchronicity.

Turning more particularly to Fig. 4, should there be no match at block 152 of the one-time password at the server computer 31, then the server computer 31 may determine at block 154 a look-ahead value. For example, the server computer 31 may determine one or more one-time password values by incrementally using counter values that are higher the present counter value 66. A look-ahead parameter for calculating the maximum number of next one-time password server values may range per application specifications. For example, the server computer 31 may calculate one hundred look-ahead, one-time password values. If a match can be determined at block 156 between a look-ahead value and the submitted one-time password, then the counter 66 may be reset at block 158. For example, the server computer's counter 66 may be set to the client computer's counter 43, plus one. An audit log 81 may additionally be updated at block 160.

Should no look-ahead values alternatively match at block 156 the received one-time password, the server computer 31 (or client computer 30, if in a stand-alone configuration) may increment at block 162 the failed attempts 73 or 84. A maximum fail parameter may be low by design, e.g., 3-5. The server computer 31 may additionally set the re-synchronization flag at block 164 and initiate re-authentication processes at block 166. Exemplary re-authentication processes may include ensuring that the client computer 30 counter 52 is higher than the counter 66 of the server computer 31, as well as that the one-time password value sent from the client computer 30 matches a one-time password determination accomplished by the server computer 31 using the client computer's counter 43.

Where so configured, the system 10 may evaluate failed authentication attempts to determine if a token has been compromised. When a user attempts to authenticate using a token 34 that has been compromised, the counter 52 of the token 34 will not have been modified. The server computer 31 can consequently detect that a submitted one-time password was previously used. In another instance, the system 10 may determine that the counter 66 of the server computer 31 is larger than the counter 43 of the client computer 30 (or token). The server computer 31 can then take counter measures, such as locking out the token and logging that a potential compromise has occurred. For this purpose, the server computer 31 and/or client computer 30 may include a look-behind algorithm 83 or storage of previous one-time passwords for determining if a one-time password has been used previously. A look-behind parameter for calculating previously used one-time passwords may vary per application specifications, e.g., corresponding to 50 counter values.

As such, a look-behind sequence used to determine a potential token compromise may include determining that a one-time password match has occurred using an older counter value, e.g., the counter on the computer is higher than the token counter value. The cryptographic data is assumed to have been compromised because the counter value of the token will never count backwards. The match is thus likely to be the result of an attacker using a cloned token. The lower token value may thus be the result of such an attacker using the secret and the counter value previously, then later re-attempting where the counter value has not been incremented.

While the exemplary steps of Fig. 4 are mostly discussed in a context of a server computer 31, one skilled in the art will appreciate that the client computer 30 may alternatively execute these or similar steps in a stand-alone configuration.

In one aspect, the present invention provides an apparatus, program product and method for enabling token authentication by generating a cryptographic key using manufacturer controlled information present on a token. A computer typically reads the manufacturer controlled information and applies a cryptographic algorithm to determine the secret, cryptographic key. The cryptographic key may comprise or be used to generate a one-time password used to authenticate the token.

By utilizing the manufacturer controlled information, token authentication may be accomplished in the absence of memory or processors on the token that are dedicated to the authentication process, itself. This feature reduces token hardware requirements and associated manufacturing expenses. Moreover, criminals may not know to look to manufacturer controlled information as a component of an authentication system.

Certain embodiments incorporate passwords, user names, and/or other data in addition to the manufacturer controlled information for realizing multiple factor (multifactor) authentication. In one such embodiment, the password is stored on the token and is automatically transmitted to the access device, possibly along with the user identifier (ID). This automatic and transparent provision of the password enables a multifactor login without requiring the user to do more than submit the token, i.e., type in a password or user ID.

Because the cryptographic key is not stored directly on the token, it cannot be read from the token, e.g. to create a cloned token. Secret data is thus not stored in the clear where it may be readily copied. Instead, the cryptographic data is determined separately from the token. Conversely, exposure of the cryptographic key on the server is limited by virtue of the manufacturer controlled information being stored separately on the token.

While more sophisticated tokens known in the art may be used, so-called "dumb" tokens may suffice in some embodiments. As such, a token may include any portable device having computer-readable manufacturer controlled information. This feature obviates the conventional requirement of including onboard memory and/or processors required for authentication, and broadens the types of devices that may comprise tokens.

While the present invention has been illustrated by the description of embodiments thereof, and while the embodiments have been described in considerable detail, additional advantages and modifications will readily appear to those skilled in the art. For instance, while certain embodiments may facilitate transparent and automatic submissions of password, other embodiments accommodate systems where one-time passwords are used, e.g., where the user enters a displayed one-time password into any password dialog using a keyboard, voice receiver, or PIN pad without needing to interface the device directly to the client machine. Furthermore, a program of the invention may encrypt conventional passwords and other information at any step delineated in the flowcharts.

One skilled in the art will appreciate that the steps flowcharts may be rearranged with respect to other steps, augmented and/or omitted. That is, the sequence of the steps in the included flowcharts may be altered, to include omitting certain processes. Similarly, related or known processes can be incorporated to complement those discussed herein.

It should furthermore be understood that the embodiments and associated programs discussed above are compatible with most known cryptographic authentication and token processes and may further be optimized to realize even greater efficiencies. For instance, the general process of enabling two factor token and biometric authentication in the presence of multiple tokens and without the user having to provide additional identification is disclosed in U.S. Patent Application Serial No. 11/013,668, which was filed on December 16, 2004, is entitled "Two Factor Token Identification,".

The invention in its broader aspects is, therefore, not limited to the specific details, representative apparatus and method, and illustrative examples shown and described. For instance, an access control device may comprise any device having electronic access controls, to include not only computers, but networks, buildings, handheld devices, etc. Moreover, a token may comprise virtually any computer-readable device, to include not only a flash drive, but Compact Flash memory, a SDcard, a magnetic stripe card, a wireless device, a headset, a handheld PDA, a cellular telephone, an audio player, a magnetic strip card, an iPod, a digital camera, a portable printer, a keyboard, a computer mouse, etc. Embodiments of the present invention can thus work over any wired or wireless (e.g. Bluetooth, WiFi, RF, etc.) connection. In another aspect of the invention, random data stored within memory, e.g., a random diversifier, may be used to authenticate in a manner analogous to that of the manufacturer controlled data.

## Claims

1. A method of controlling user access with a token having fixed manufacturer controlled information, the method comprising determining the manufacturer controlled information from the token, generating a cryptographic key using the manufacturer controlled information of the token, and authenticating the token using the generated cryptographic key.

2. The method of claim 1, wherein authenticating the token using the cryptographic key further comprises determining a one-time password.

3. The method of claim 2, further comprising determining that the one-time password matches another one-time password.

4. The method of claim 3, wherein determining the one-time password further includes updating a counter.

5. The method of claim 4 further comprising synchronizing the counter with a second counter.

6. The method of claim 1, wherein authenticating the token using the cryptographic key further comprises additionally using a password.

7. The method of claim 6, wherein using the password further comprises using a password actively input by a user.

8. The method of claim 6, wherein using the password further comprises using a password read from a memory.

9. The method of any preceding claim, wherein authenticating the token further comprises determining a look ahead value used for comparison of at least one of the cryptographic key and a value determined using the cryptographic key.

10. The method of any preceding claim, wherein authenticating the token using the cryptographic key further includes receiving a user name.

11. The method of claim 10, wherein receiving the user name further comprises receiving the user name from a memory.

12. The method of any preceding claim, wherein determining the manufacturer controlled information further comprises determining the manufacturer controlled information from a flash drive.

13. The method of any preceding claim, wherein generating the cryptographic key using the manufacturer controlled information further comprises applying a cryptographic algorithm to the manufacturer controlled information.

14. The method of any preceding claim, wherein generating the cryptographic key using the manufacturer controlled information further comprises using a serial number.

15. The method of any preceding claim, wherein generating the cryptographic key using the manufacturer controlled information further comprises using a manufacturer identifier.

16. The method of any preceding claim, wherein generating the cryptographic key using the manufacturer controlled information further comprises using at least one of a product identifier, a date of manufacture and a model number.

17. The method of any preceding claim, further comprising determining that at least one of the token and an authenticating computer has been compromised.

18. The method of claim 17, wherein determining that at least one of the token and the authentication computer has been compromised further comprises determining that a first counter of the token is different than a second counter of the authenticating computer.

19. The method of any preceding claim, wherein authenticating the cryptographic token further comprises authenticating at a computer that is remote from a device that receives the token.

20. The method of any preceding claim, wherein authenticating the cryptographic token further comprises authenticating at a client computer.

21. A method of controlling user access with random data stored within a memory of a token, the method comprising determining the random data from the token, generating a cryptographic key using the random data of the token, and authenticating the token using the generated cryptographic key.

22. An apparatus, comprising a token having fixed manufacturer controlled information, and an access control device comprising a program resident in a memory, the program configured to determine the manufacturer controlled information from the token, to generate a cryptographic key using the manufacturer controlled information of the token, and to authenticate the token using the generated cryptographic key.

23. The apparatus of claim 22, further comprising a log included in the memory, the log configured to maintain a count of failed authentication attempts.

24. The apparatus of either claim 22 or claim 23, wherein the cryptographic key comprises a one-time password.

25. The apparatus of claim 24, wherein the program is further configured to determine if the one-time password matches another one-time password retrieved from the memory.

26. The apparatus of any one of claims 22 to 25, further comprising at least one of a counter and a clock.

27. The apparatus of claim 26, wherein the program is further configured to synchronize the counter with a second counter.

28. The apparatus of any one of claims 22 to 27, wherein the program is further configured to determine a look ahead value used for comparison of at least one of the cryptographic key and a value determined using the cryptographic key.

29. The apparatus of any one of claims 22 to 28, wherein the token comprises a flash drive.

30. The apparatus of any one of claims 22 to 30, wherein the program is further configured to authenticate the token using multifactor data.

31. The apparatus of any one of claims 22 to 30, wherein the manufacturer controlled information further comprises at least one of a serial number, a manufacturer identifier, a model number, and a date of manufacture.

32. An access control device, comprising a token comprising a memory having random data, and a program resident in the memory, the program configured to determine the random data from the token, to generate a cryptographic key using the random data of the token, and to authenticate the token using the generated cryptographic key.

33. A program product, comprising program code configured to determine fixed manufacturer controlled information from a token, to generate a cryptographic key using the manufacturer controlled information of the token, and to authenticate the token using the generated cryptographic key, and a signal bearing medium bearing the program code.
